**Europäisches Patentamt**

**European Patent Office**

**Office européen des brevets**

(19)

(11) Veröffentlichungsnummer: **0 224 100**
**B1**

(12) # EUROPÄISCHE PATENTSCHRIFT

(45) Veröffentlichungstag der Patentschrift:
**18.01.89**

(51) Int. Cl.⁴: **G21C 17/06**

(21) Anmeldenummer: **86115516.6**

(22) Anmeldetag: **08.11.86**

(54) **Verfahren und Einrichtung zum Prüfen der Abmessungen eines Brennelementes für Kernreaktoren.**

(30) Priorität: **29.11.85 DE 3542204**

(43) Veröffentlichungstag der Anmeldung:
**03.06.87 Patentblatt 87/23**

(45) Bekanntmachung des Hinweises auf die Patenterteilung:
**18.01.89 Patentblatt 89/3**

(84) Benannte Vertragsstaaten:
**BE CH DE FR IT LI NL SE**

(56) Entgegenhaltungen:
**EP-A- 0 053 066**
**FR-A- 2 541 497**
**US-A- 4 377 911**

(73) Patentinhaber: **ABB Reaktor GmbH, Dudenstrasse 44, D-6800 Mannheim 1(DE)**

(72) Erfinder: **Scharpenberg, Rainer, Dipl.-Ing., Im Krappenklingen 32, D-6948 Wald-Michelbach(DE)**

(74) Vertreter: **Kempe, Wolfgang, Dr. et al, c/o BROWN, BOVERI & CIE AG ZPT Postfach 351, D-6800 Mannheim 1(DE)**

**Beschreibung**

Die Erfindung betrifft ein Verfahren zum Prüfen der Abmessungen eines Brennelementes für Kernreaktoren mit zwei parallel erstreckten Sonden, die an ihren freien Enden in ihrer Schallrichtung gegeneinander gerichtete Ultraschallprüfköpfe tragen und relativ zu dem in einem Wasserbecken angeordneten Brennelement bewegbar sind, wobei der eine Ultraschallprüfkopf die Schallwellen aussendet und der andere Ultraschallprüfkopf die ausgesandten Schallwellen empfängt.

Ein derartiges Verfahren ist aus der EP-A 0 080 418 bekannt. Dort wird der Abstand zwischen zwei Brennstäben mit Hilfe der Impuls/Echomethode ermittelt. Dazu wird an zwei gegenüberliegenden Brennelementseiten ein mit einem Sende/Emfängerprüfkopf bestückter Arm vorbeigeführt. Die von den Brennstäben der außenliegenden Brennstabreihe zurücklaufenden Echos werden hinsichtlich ihrer Laufzeit analysiert und geben Aufschluß über die Lage der Brennstäbe zueinander bzw. zu einer Normalachse. Lediglich zur Korrektur der temperaturabhängigen Fortpflanzungsgeschwindigkeit in Wasser wird eine der Ultraschallprüfköpfe als Sender und der andere als Empfänger eingesetzt.

Demgegenüber stellt sich die Aufgabe ein Verfahren der eingangs genannten Art anzugeben, mit dessen Hilfe die Außenkonturen eines Brennelementes vermessen werden können.

Gelöst wird diese Aufgabe erfindungsgemäß dadurch, daß beim Vermessen der Außenkonturen des Brennelementes der Kontakt einer der Sonden mit dem Brennelement dadurch festgestellt wird, daß eine einem Ultraschallprüfkopf abgewandte Sondenseite an dem Brennelement zur Anlage gebracht wird, daß aufgrund des Anlagedruckes die Sonden in Richtung der Schallwellen gegeneinander bewegt werden, daß diese Sondenbewegung durch eine Verringerung der Laufzeit der Schallwellen zwischen den Prüfköpfen angezeigt und erfaßt wird und daß das Maß der Sondenbewegung bei der Bildung des Istmaßes des zu prüfenden Brennelementbereiches berücksichtigt wird.

Durch die Kombination eines elastischen Anschlages mit einer Anzeige des Berührungszeitpunktes und der Auslenkung des Anschlagfingers wird eine exakte Vermessung von Brennelementteilen erzielt und eine Beschädigung des Brennelementes vermieden.

Eine Einrichtung zur Durchführung des Verfahrens ist dadurch gekennzeichnet, daß an der dem Ultraschallprüfkopf abgewandten Sondenseite ein Fühler angebracht ist, der über eine Rolle den zu prüfenden Brennelementbereich kontaktet.

Neben einer schonenden Behandlung der Brennelementoberfläche schafft die Rollenausbildung die Möglichkeit, einen Brennelementbereich auf Fluchtabweichung zu überprüfen.

Anhand von Ausführungsbeispielen und der Figuren 1 bis 8 wird das erfindungsgemäße Verfahren und eine Einrichtung zur Durchführung des Verfahrens beschrieben.

Dabei zeigt die

Figur 1 in einer schematischen Vorderansicht ein Brennelement und einen Manipulator zum Bewegen der Sonden,

Figur 2 einen Querschnitt des Brennelementes entlang der Linie II-II der Figur 1,

Figur 3 ein Ultraschall-Sondenpaar in einem größeren Maßstab,

Figur 4 eine Ansicht in Pfeilrichtung IV der Figur 3,

Figur 5 eine Bildschirmdarstellung einer Impulsauswertung,

Figur 6 einen Teilbereich eines Brennelementes,

Figur 7 eine besondere Sondenausbildung und

Figur 8 eine Bildschirmdarstellung von Schallimpulsen für eine Sonde nach Figur 7.

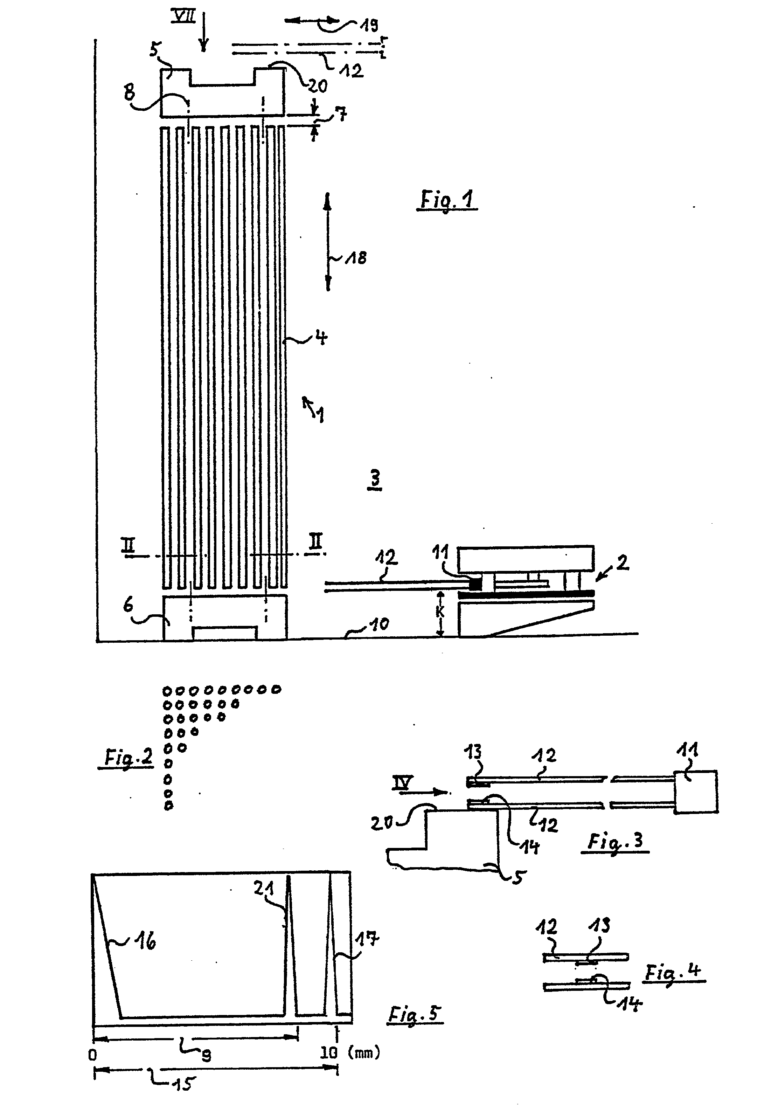

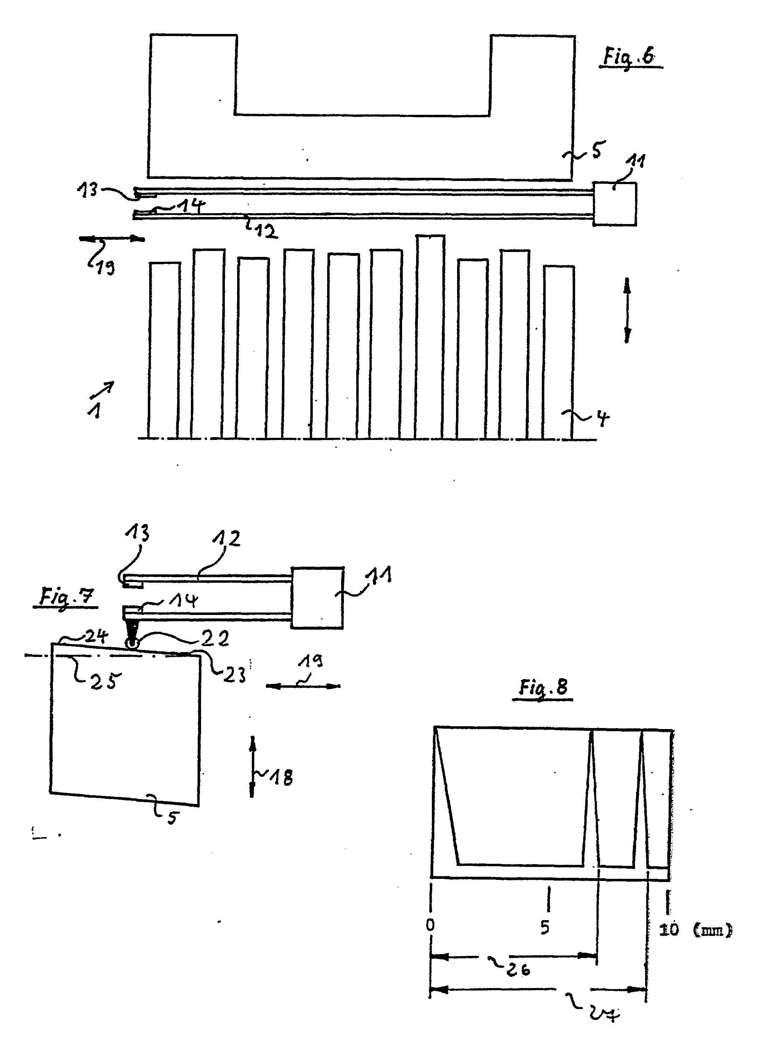

Die Figur 1 zeigt ein Brennelement 1, das zusammen mit einem Manipulator 2 in einem Wasserbecken 3 angeordnet ist. Mehrere Brennstäbe 4 bilden ein Brennstabbündel, das zwischen zwei Endplatten 5, 6 angeordnet ist, wobei zwichen den Endplatten 5, 6 und dem Ende eines Brennstabes ein Abstand 7 vorgesehen ist. Zugglieder 8 dienen zur Festlegung der Endplatten 5, 6 relativ zueinander. Nicht dargestellte Abstandshalter sorgen für die Führung der Brennstäbe und für die Aufrechterhaltung der notwendigen Zwischenräume unter den Brennstäben. Ebenso wie das Brennelement ist auch der Manipulator 2 am Boden 10 des Wasserbeckens 3 abgestützt. Der Manipulator weist einen Träger 11 auf, in den zwei Sonden 12 gehalten sind. Wie insbesondere aus den Figuren 3 und 4 zu ersehen ist, bestehen die Sonden aus einem federnd ausgebildeten Flachmaterial, das einen Querschnitt von ca. 20 x 1 mm aufweist. Sie sind parallel zueinander angeordnet und erstrecken sich mit ihrer Breitseite in etwa parallel zum Boden 10 des Wasserbeckens 3. Von dem Träger 11 kragen die Sonden 12 mindestens so weit aus, wie ein Brennelement im Querschnitt betrachtet breit ist. An ihren freien Enden sind an den zueinandergerichteten Seitenflächen Ultraschallprüfköpfe 13, 14 angeordnet. Die Ultraschallprüfköpfe liegen einander gegenüber und weisen zueinander einen Abstand von ca. 10 mm auf. Der eine Ultraschallprüfkopf 13 ist als Sender und der andere Ultraschallprüfkopf 14 ist als Empfänger ausgebildet. Da sie im Wasser angeordnet sind, ist die Laufzeit des Sendeimpulses durch die Wasserstrecke bis zum Empfänger-Prüfkopf 14 eine vom Abstand der Prüfköpfe zueinander abhängige Größe. Der in der Figur 5 dargestellte Bildschirmauszug zeigt die Laufzeit 15 des Sendeimpulses 16 nach dem Durchlaufen der Wasserstrecke zwischen den Ultraschallprüfköpfen 13 und 14. Das Ende der Laufzeit wird durch die Amplitude 17 verdeutlicht.

Soll überprüft werden, ob das Brennelement in seiner Gesamtlänge beim Einsatz im Kernreaktor gewachsen ist, wird die tatsächliche Brennelement-Länge wie folgt ermittelt. Die dem Ultraschallprüfkopf 14 abgewandte Breitseite einer Sonde 12 wird nach einer entsprechenden Fahrbewegung des Manipulators 2 in Pfeilrichtung 18 und 19 langsam an die Stirnseite 20 der Endplatte 5 herangefahren und dort zur Anlage gebracht. Mit dem strichpunktiert dargestellten Sondenpaar 12 wird der Weg in Pfeilrichtung 18 über die Höhe der Stirnseite 20 hinaus und die nachfolgende Bewegung in Pfeilrichtung 19 angedeutet. Erst dann erfolgt die gegenläufige Bewegung bis zur Anlage an die Stirnseite 20 der Endplatte 5. Auf die Darstellung der Führungs- und Antriebselemente des Manipulators 2 wurde aus Gründen einer besseren Übersicht verzichtet. Nach erfolgter Anlage wird sich aufgrund der federnden Ausbildung der Sonden 12 ein Abstandsmaß zwischen den beiden Sonden einstellen, das kleiner ist als der Abstand bei nicht angelegter Sonde. Das sich einstellende Abstandsmaß läßt sich an dem in Millimeter geeichten Bildschirm nach Fig. 5 erkennen. Das Ende der verringerten Laufzeit 9 des Sendeimpulses 16 nach dem Durchlaufen des kleineren Abstandes zwischen den Sonden 12 ist durch die Amplitude 21 dargestellt. Das tatsächliche Längenmaß des Brennelementes setzt sich zusammen aus dem konstanten Maß "k" zwischen dem Boden 10 des Wasserbeckens 3 und der Breitseite der Sonde 12 bei am Boden 10 angeordnetem Manipulator 2 plus dem Fahrweg des Manipulators bis zur Anlage der Sondenbreitseite an der Stirnseite 20 der Endplatte 5 minus der Differenz aus der Laufzeit 9 und 15, die nach dem Bildschirmausschnitt der Figur 5 einen Millimeter beträgt.

In der Figur 6 ist der obere Endbereich eines Brennelementes 1 nach Figur 1 in einem größeren Maßstab dargestellt. Beim Betrieb einer Reaktoranlage erfahren die einzelnen Brennstäbe 4 eine unterschiedliche Längenänderung. Bei einer in regelmäßigen Abständen stattfindenden Wiederholungsprüfung ist der Abstand zwischen dem Brennstab der größten Längung und der Endplatte 5 zu ermitteln. Dazu wird das Sondenpaar unter Einhaltung eines möglichst geringen Abstandes zur Unterseite der Endplatte 5 in den Raum zwischen dieser Endplatte 5 und den Brennstabenden in Pfeilrichtung 19 eingefahren. Nachdem die Sonden über die gesamte Brennelementbreite eingefahren sind, erfolgt deren Bewegung in Richtung zur Endplatte 5 hin. Der Anfahrvorgang kann gezielt über den Bildschirm erfolgen. Eine Verringerung der Laufzeit der Ultraschallsignale zwischen Sender- und Empfängerprüfkopf 13, 14 zeigt den Kontakt mit der Endplatte 5 an. Der Fahrweg der Sonden 12 in Richtung zu den Brennstabenden hin bis zum Anstoß an dem die größte Längung aufweisenden Brennstab ist gleich dem Abstandsmaß. Die Verrringerung der Laufzeit der Schallimpulse zwischen den Ultraschallprüfköpfen dient in diesem Beispiel der Sichtbarmachung des Kontaktvorganges zwischen der dem Ultraschallprüfkopf 13, 14 abgewandten Sondenseite und der Endplatte 5 bzw. einem Brennstabende.

Nach der Figur 7 wird die Anwendung des Verfahrens zum Prüfen einer Fluchtabweichung einer Endplatte 5, 6 beschrieben. Dabei ist der dem Ultraschallprüfkopf 14 abgewandten Sondenseite ein als Rolle 22 ausgebildeter Fühler zugeordnet. Die Figur 4 zeigt eine Ansicht der Endplatte 5 in Pfeilrichtung VII der Figur 1 mit gegenüber der Ausbildung nach Figur 1 um 90° gedrehten Sonden. Durch Anlegen der Rolle 22 an der Position 23 und dann an der Position 24 wird über die Laufzeit des Sendeimpulses vom Sendeprüfkopf 13 zum Empfängerprüfkopf 14 festgestellt, welche Position näher zur Fluchtlinie 25 angeordnet ist. Die Differenz der Laufzeiten 26, 27 kann auf dem Bildschirm unmittelbar in Millimeter abgelesen werden (Figur 8). Falls erforderlich läßt sich auch der Verlauf der Abweichung von der Fluchtlinie 25 zwischen den Positionen 23 und 24 durch kontinuierliches Bewegen des Sondenträgers 11 in Pfeilrichtung 19 dokumentieren.

**Patentansprüche**

1. Verfahren zum Prüfen der Abmessungen eines Brennelementes (1) für Kernreaktoren mit zwei parallelerstreckten Sonden (12), die an ihren freien Enden in ihrer Schallrichtung gegeneinandergerichtete Ultraschallprüfköpfe (13, 14) tragen und relativ zu dem in einem Wasserbecken angeordneten Brennelement bewegbar sind, wobei der eine Ultraschallprüfkopf (13) die Schallwellen aussendet und der andere Ultraschallprüfkopf (14) die ausgesandten Schallwellen empfängt, dadurch gekennzeichnet, daß beim Vermessen der Außenkonturen des Brennelementes der Kontakt einer der Sonden mit dem Brennelement dadurch festgestellt wird, daß eine einem Ultraschallprüfkopf (13, 14) abgewandte Sondenseite an dem Brennelement (1) zur Anlage gebracht wird, daß aufgrund des Anlagedruckes die Sonden (12) in Richtung der Schallwellen gegeneinander bewegt werden, daß diese Sondenbewegung durch eine Verringerung der Laufzeit der Schallwellen zwischen den Prüfköpfen (13, 14) angezeigt und erfaßt wird und daß das Maß der Sondenbewegung bei der Bildung des Istmaßes des zu prüfenden Brennelementbereiches berücksichtigt wird.

2. Einrichtung zur Durchführung des Verfahrens nach Anspruch 1, dadurch gekennzeichnet, daß an der dem Ultraschallprüfkopf (14) abgewandten Sondenseite ein Fühler angebracht ist, der über eine Rolle (20) den zu prüfenden Brennelementbereich kontaktet.

**Claims**

1. Method for checking the dimensions of a fuel assembly (1) for nuclear reactors with two probes (12) extending in parallel which carry ultrasonic test heads (13, 14) on their free ends directed towards each other in their acoustic direction and which are movable relative to the fuel assembly which is disposed in a water tank, the one ultrasonic test head (13) emitting the acoustic waves and the other ultrasonic test head (14) receiving the acoustic waves emitted, characterized in that, during measurement of the outer contours of the fuel assembly, the contact between one of the probes and the fuel assembly is determined by the fact that a probe side facing away from an ultrasonic test head (13, 14) is brought into contact with the fuel assembly (1), that, because of the contact pressure, the probes (12) are moved towards each other in the direction of the acoustic waves, that said probe movement is indicated and assessed by a reduction of the transit time of the acoustic waves and that account is taken of the dimension of probe movement in deriving the actual dimension of the fuel assembly region to be checked.

2. Device for carrying out the method according to Claim 1, characterized in that a sensor is provided on the probe side facing away from the ultrasonic test head (14) which sensor makes contact with the fuel assembly region to be checked via a roller.

## Revendications

1. Procédé pour vérifier les dimensions d'un assemblage combustible (1) pour réacteurs nucléaires au moyen de deux sondes parallèles (12) qui, au niveau de leurs extrémités libres, portent des capteurs à ultrasons (13, 14) dirigés l'un vers l'autre dans le sens du son et peuvent de déplacer par rapport à l'assemblage combustible déposé dans une piscine, l'un des capteurs (13) émettant les ondes sonores et l'autre capteur (14) recevant les ondes sonores émises, caractérisé par le fait que, lors de la mesure des contours extérieurs de l'assemblage combustible, le contact d'une des sondes avec l'assemblage combustible est établi par le fait qu'une face de la sonde, située du côté opposé à un capteur (13, 14), vient s'appliquer contre l'assemblage combustible, que sous l'effet de la pression d'application, les sondes (12) sont déplacées l'une vers l'autre dans le sens des ondes sonores, que ce déplacement des sondes est indiqué par une diminution du temps de parcours des ondes sonores entre les capteurs (13, 14) et est déterminé, et que l'on fait intervenir la grandeur du déplacement des sondes lors de la formation de la dimension effective de la zone de l'assemblage combustible à examiner.

2. Dispositif pour la mise en œuvre du procédé selon la revendication 1, caractérisé par le fait que sur la face de la sonde, qui est située du côté opposé au capteur (14), est placé un capteur qui entre en contact avec la zone à examiner de l'assemblage combustible par l'intermédiaire d'un galet 20.

EP 0 224 100 B1

Fig. 1

Fig. 2

Fig. 3

Fig. 4

Fig. 5

EP 0 224 100 B1

Fig.6

5

11

13

14

12

19

1

4

Fig.7

13

12

11

14

24

22

25

23

19

18

5

Fig.8

0

5

10 (mm)

26

27